# EUROPÄISCHE PATENTSCHRIFT

(11) **EP 1 026 407 B1**
(45) Veröffentlichungstag und Bekanntmachung des Hinweises auf die Patenterteilung: **17.11.2004**
(21) Anmeldenummer: 00101678.1
(22) Anmeldetag: 02.02.2000
(51) Int. Cl.: F15B 13/043, F15C 3/14

(54) **Fluidisches Steuerelement**
Fluid control element
Elément de commande fluidique

(30) Priorität: 03.02.1999 DE 29901855 U
(43) Veröffentlichungstag der Anmeldung: 09.08.2000
(73) Patentinhaber: Bürkert Werke GmbH & Co., D-74653 Ingelfingen (DE)
(72) Erfinder: Rohrbeck, Heribert, 74523 Schwäbisch Hall (DE)
(74) Vertreter: Degwert, Hartmut, Dipl.-Phys.

(56) Entgegenhaltungen:
- EP-A- 0 488 262
- DE-U- 29 507 380
- FR-A- 1 249 404
- US-A- 4 765 370

## Beschreibung

Die Erfindung betrifft ein fluidisches Steuerelement gemäß dem Oberbegriff von Anspruch 1.

Bekannt sind fluidische Steuerelemente der eingangs genannten Art aus der DE 295 07 380 U1. Bei diesen bekannten fluidischen Steuerelementen sind die Strömungskanäle und die anschließenden Ventilsitze diametral in zwei annähernd gleichen Gehäuseteilen angeordnet. Das Steuerelement wird aus einem zweiarmigen Hebel gebildet, der in der Mitte des Gehäuses gelagert ist. Einer der Hebelarme wird zwischen den zwei sich gegenüber liegenden Sitzen bewegt, der zweite Hebelarm dient als Bewegungsarm. Als Abdichtung zwischen den Gehäuseteilen sowie dem Steuer- und Antriebsraum und als elastisches Lagerelement dient eine elastische Hülle um das Betätigungselement. Wegen der diametralen Anordnung der Ventilsitze werden die Kanäle in dem fluidischen Steuerelement abgewinkelt herausgeführt, um eine einfache fluidische Schnittstelle zu erhalten, bei der alle Kanäle in einer Ebene aus dem fluidischen Steuerelement herausgeführt werden. Dies führt zu einer unerwünschten Vergrößerung des internen Volumens und damit des umbauenden Gehäuses.

In der US-A-4,765,370 ist ein fluidisches Steuerelement gezeigt, dessen Dichtungs-Betätigungselement einen zweiarmigen Hebel aufweist. Die Hebelarme sind jeweils in voneinander getrennten, im Gehäuse des fluidischen Steuerelements gebildeten Steuerräumen angeordnet. Das Gehäuse ist aus einem Oberteil und einem Unterteil gebildet, wobei sowohl in dem Oberteil als auch in dem Unterteil Strömungskanäle gebildet sind, die in die Steuerräume münden. Das Dichtungs-/Betätigungselement ist zwischen zwei Endstellungen bewegbar, in denen es abwechselnd einen Dichtsitz in einem Steuerraum schließt bzw. freigibt und einen anderen Dichtsitz in dem anderen Steuerraum freigibt bzw. schließt.

Der Erfindung liegt die Aufgabe zugrunde, ein fluidisches Steuerelement der eingangs genannten Art derart weiterzuentwickeln, daß die fluidische Schnittstelle ohne Umleitung der Kanäle horizontal in einer Ebene in einem Gehäuseteil angeordnet ist. Durch diese Maßnahme kann auf einfache Weise das interne Volumen des fluidischen Steuerelements reduziert werden, woraus sich vorteilhafter Weise eine geringere Gehäusegröße ergibt. Ferner reduziert sich bei dem erfindungsgemäßen fluidischen Steuerelement die Bauteilevielfalt auf wenige Teile, wodurch es in einfacher Weise zusammengebaut werden kann und sich besser für eine Massenproduktion eignet.

Durch die Erfindung wird ein fluidisches Steuerelement zur Verfügung gestellt, bei dem die Dichtsitze und die sich anschließenden Fluidkanäle horizontal in einer Ebene in einem Gehäuseteil untergebracht sind. Durch diese Maßnahme wird eine Schnittstelle zur Verfügung gestellt, die in einfacher Weise eine standardisierte Ankopplung des fluidischen Steuerelementes an weitere fluidische Bauteile ermöglicht. Das zweite Gehäuseteil dient als Abdeckung. Bei einer bevorzugten Ausführungsform des fluidischen Steuerelements sind die beiden Gehäuseteile entlang einer Trennebene zusammengefügt und können einfach und kostengünstig hergestellt werden. Zwischen beiden Gehäuseteilen ist erfindungsgemäß ein kombiniertes Dichtungs- und Betätigungselement mit einem äußeren Teil eingespannt, ein drehbarer Hebel liegt in der Mitte durch einen Lagerarm am Gehäuse auf und öffnet und schließt, mit an der den Dichtsitzen zugewandten Seite der Hebelarme angebrachten Sitzdichtungen, abwechselnd die Dichtsitze links und rechts von dieser Lagerung. Das Dichtungs- / Betätigungselement ist vollständig von einer Umhüllung aus elastischem Werkstoff umgeben, in die die Sitzdichtungen integriert sind.

Das Dichtungs-/Betätigungselement ist in Form eines zweiarmigen Hebels ausgebildet, der mit einem rechtwinklig zu seiner Längsachse angeordneten Lagerarm versehen ist, dessen äußere, gleichfalls von der Umhüllung eng umschlossenen Enden mittels dieser zwischen den beiden Gehäuseteilen eingespannten Umhüllung drehbar gelagert ist. Die Art der Lagerung zeichnet sich sowohl durch große Nachgiebigkeit aus, so daß nur geringe Antriebskräfte erforderlich sind, als auch durch eine genaue Definition der Schwenkachse, die unkontrollierte Bewegungen des zweiarmigen Hebels trotz seiner Lagerung in elastisch nachgiebigem Werkstoff weitgehend vermeidet.

Die Betätigung des zweiarmigen Hebels erfolgt durch Einleiten eines Drehmoments in den Lagerarm, dessen Enden aus dem Fluidgehäuse herausragen. Zu diesem Zweck schließen sich an den Lagerarm Betätigungsarme an, die in beliebiger Weise steuerbar sind, z.B. durch einen Elektromagneten, ein piezoelektrisches Element usw.

Die für die Drehbewegung des Hebels erforderlichen Antriebs- und Zuhaltekräfte werden bei einer weiteren Ausführungsform durch eine fluidische Rückkopplung erheblich reduziert. Das fluidische Steuerelement wird in seinen Haltestellungen dadurch druckentlastet, daß das Gehäuseoberteil mit dem Hebel zwei Druckräume bildet, die durch die Hebelarme vom Arbeitsraum und voneinander vollständig abgeschlossen sind. Die jeweils einem Dichtsitz zugeordneten Strömungskanäle kommunizieren mit jeweils einem der Druckräume über Rückkopplungskanäle. Die der jeweiligen Druckkammer zugewandte Fläche des Hebelarms wird somit mit einem Druck beaufschlagt, der bestrebt ist, die Sitzdichtung dieses Hebelarms gegen den auf der der Druckkammer abgewandten Seite gelegenen Dichtsitz anzudrücken. Entsprechend geringer sind die am Betätigungsarm aufzubringenden Antriebskräfte.

Das erfindungsgemäße fluidische Steuerelement kann zum Absperren, Weiterleiten, Drosseln, Umschalten, Mischen oder Verteilen von Fluidströmen verwendet werden. Die an der Unterseite des Gehäuses mündenden Strömungskanäle bilden vorzugsweise eine standardisierte fluidische Schnittstelle, an die andere Systemelemente mit entsprechenden Schnittstellen angekoppelt werden kann. Je nach Verwendungszweck des fluidischen Steuerelements wird der Lagerarm bzw. werden die Betätigungsarme an unterschiedliche Antriebseinheiten angekoppelt, die ebenfalls vorzugsweise standardisiert und daher austauschbar sind.

Die Erfindung ist nachstehend anhand eines in den anliegenden Zeichnungen dargestellten Ausführungsbeispiels erläutert. Es zeigen:
Fig. 1 eine Schnittzeichnung durch eine bevorzugte Ausführungsform des erfindungsgemäßen fluidischen Steuerelements;
Fig. 2 eine Draufsicht auf das kombinierte Dichtungs-/Betätigungselement

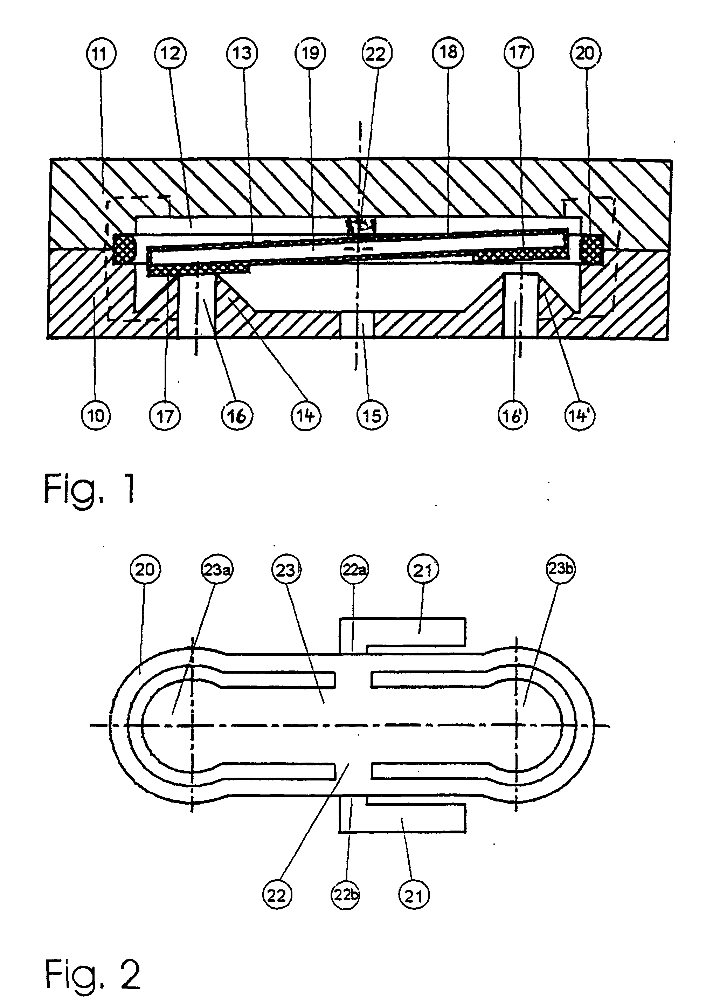

Fig. 1 zeigt eine bevorzugte Ausführungsform des fluidischen Steuerelements in 3/2-Wege-Funktion mit einem allgemein flachen, quaderförmigen Gehäuse, das aus zwei Gehäuseteilen 10, 11 zusammengesetzt ist. Zwischen den Gehäuseteilen 10, 11 ist ein Steuerraum 12 gebildet. In den Steuerraum 12 ragen zwei Dichtsitze 14, 14' hinein, die in einer Ebene am Gehäuseteil 10 gebildet sind. Von jedem Dichtsitz 14, 14' geht ein Strömungskanal 16, 16' aus, der gerade verläuft und die Wandung des Gehäuseteils 10 durchstößt. Ein weiterer Strömungskanal 15 führt aus dem Steuerraum 12 durch dieselbe Wandung und mündet wie die Strömungskanäle 16, 16' an der Unterseite des Gehäuses 10. Das Gehäuseteil 11 dient als Abdeckung des Steuerraumes 12. In dem Steuerraum 12 befindet sich ein Dichtungs-/Betätigungselement 13, das aus einem mit elastischem Werkstoff umgebenen festen Kern 19 eines Hebels 23 besteht, der zwischen den Gehäuseteilen 10, 11 schwenkbar gelagert ist und zwischen zwei Endstellungen beweglich ist, wobei das Schwenklager 22 des Hebels 23 durch eine ihn eng umschließende, zwischen zwei Teilen des Gehäuses 10, 11 eingespannte Umhüllung 18 aus elastischem Werkstoff gebildet wird. Der Hebel 23 deckt mit einem an der dem Dichtsitz 14 gegenüberliegenden Seite des Hebelarms 23a angeformten Sitzdichtung 17 den ersten Dichtsitz 14 ab und gibt mit der dem Dichtsitz 14' gegenüberliegenden Seite des Hebelarms 23b mittels der angeformten Sitzdichtung 17' den zweiten Dichtsitz 14' frei. In einer zweiten Endstellung öffnet der Hebel 23 den ersten Dichtsitz 14 und schließt den zweiten Dichtsitz 14'.

Zwischen den Gehäuseteilen 10, 11 ist ein kombiniertes Dichtungs-/Betätigungselement 13 eingespannt, das in Fig. 2 gesondert dargestellt ist. Es besteht aus einem Hebel 23, der zwei Steuerarme 23a, 23b ausbildet, einem Lagerarm 22, an dessen Enden 22a, 22b sich die Betätigungsarme 21 anschließen, und einem Dichtrahmen 20 aus Elastomerwerkstoff, der mit der Umhüllung 18 der Steuerarme 23a, 23b und des Lagerarms 22 eine Einheit bildet. Dieses kombinierte Dichtungs-/Betätigungselement 13 setzt sich aus einen zweiarmigen Hebel 23 zusammen, dessen Arme 23a, 23b die Steuerarme bilden und der zwischen diesen Armen 23a, 23b am senkrecht zur Längsachse des zweiarmigen Hebels 23 angeordneten Lagerarm 22 drehbar gelagert ist. Die äußeren Enden des Lagerarms 22 ragen aus dem Dichtrahmen 20 heraus. An diese Enden schließen sich die Betätigungsansätze 21 an. Der Dichtrahmen 20 umgibt die Umhüllung 18 der Steuerarme 23a, 23b mit Abstand und bildet in eingebautem Zustand eine äußere Begrenzung und Abdichtung des Steuerraumes 12.

Der Lagerarm 22 ist, wie aus Fig. 1 ersichtlich, am Außenrand mit seiner Umhüllung 18 zwischen den Gehäuseteilen 10, 11 eingespannt. Die Umhüllung 18 aus Elastomerwerkstoff bildet ein Drehlager für die Enden des Lagerarms 22a, 22b und somit ein Schwenklager für den aus den Steuerarmen 23a, 23b bestehenden zweiarmigen Hebel 23. Das Dichtungs-/Betätigungselement 13 mit seiner Umhüllung 18 ist über den Dichtsitzen 14, 14' beweglich und deckt mit den an der Umhüllung 18 angeformten Sitzdichtungen 17, 17' diese abwechselnd ab bzw. gibt sie frei. Der Antrieb des Dichtungs-/Betätigungselements 13 erfolgt durch Einleitung eines Drehmoments in den Lagerarm 22, dessen Enden 22a, 22b aus dem Gehäuse herausragen, etwa durch eine Bewegung der an die Enden des Lagerarms 22a, 22b anschließenden Betätigungsansätze 21.

## Patentansprüche

1. Fluidisches Steuerelement mit einem allgemein flachen, quaderförmigen Gehäuse, das aus zwei Gehäuseteilen (10, 11) zusammengesetzt ist, einem zwischen den Gehäuseteilen (10, 11) gebildeten Steuerraum (12), in den wenigstens ein erster (16) und ein zweiter (16') Strömungskanal münden, denen jeweils ein in den Steuerraum (12) hineinragender erster Dichtsitz (14) und zweiter Dichtsitz (14') zugeordnet ist, und mit einem in dem Steuerraum (12) befindlichen Dichtungs-/Betätigungselement (13), dessen fester Kern (19) von einem elastischen Werkstoff umgeben ist und das einen zweiarmigen Hebel (23) ausbildet, der zwischen den Gehäuseteilen (10, 11) schwenkbar gelagert ist und dessen Schwenklager (22) durch eine ihn eng umschließende, zwischen den zwei flachen Gehäuseteilen (10, 11) eingespannte Umhüllung (18) aus elastischem Werkstoff gebildet ist, wobei der Hebel (23) zwischen einer ersten und einer zweiten Endstellung beweglich ist, und wobei der Hebel (23) in der ersten Endstellung den ersten Dichtsitz (14) abdeckt und den zweiten Dichtsitz (14') freigibt und in der zweiten Endstellung den ersten Dichtsitz (14) öffnet und den zweiten Dichtsitz (14') schließt, **dadurch gekennzeichnet, daß** der erste (14) und der zweite (14') Dichtsitz in dem Steuerraum (12) in einer Ebene an einem (10) der Gehäuseteile angeordnet sind, daß die den Dichtsitzen (14, 14') zugeordneten Strömungskanäle (16, 16') senkrecht durch dieses Gehäuseteil (10) führen und daß das andere Gehäuseteil (11) als Abdeckung des Steuerraums (12) dient, und daß der erste Dichtsitz (14) von einer an der dem ersten Dichtsitz (14) gegenüberliegenden Seite des ersten Hebelarms (23a) angeformten Sitzdichtung (17) geschlossen und freigegeben wird und daß der zweite Dichtsitz (14') von einer an der dem zweiten Dichtsitz (14') gegenüberliegenden Seite des zweiten Hebelarms (23b) angeformten Sitzdichtung (17') geschlossen und freigegeben wird, wobei der erste Hebelarm (23a) und der zweite Hebelarm (23b) gleichartige Betätigungsarme sind.

2. Fluidisches Steuerelement nach Anspruch 1, **dadurch gekennzeichnet, daß** der Kern (19) des Hebels (23) aus einem starren Werkstoff besteht.

3. Fluidisches Steuerelement nach einem der Ansprüche 1 oder 2, **dadurch gekennzeichnet, daß** der Hebel (23) einen quer zu seiner Längsrichtung angeordneten Lagerarm (22) aufweist, dessen äußere, von der Umhüllung (18) eng umschlossenen Enden mittels dieser zwischen den zwei Teilen des Gehäuses (10, 11) eingespannten Umhüllung (18) drehbar gelagert sind.

4. Fluidisches Steuerelement nach Anspruch 3, **dadurch gekennzeichnet, daß** die aus der Umhüllung (18) seitlich herausragenden Enden des Lagerarms (22a, 22b) mit den Betätigungsarmen (21) starr verbunden sind.

5. Fluidisches Steuerelement nach einem der vorstehenden Ansprüche, **dadurch gekennzeichnet, daß** die Umhüllung (18) einteilig mit einem den Steuerraum umschließenden Dichtrahmen (20) aus demselben elastischen Werkstoff ausgebildet und der Dichtrahmen (20) zwischen den zwei Teilen (10, 11) des Gehäuses eingespannt ist.

6. Fluidisches Steuerelement nach einem der vorstehenden Ansprüche, **dadurch gekennzeichnet, daß** die flachen Gehäuseteile (10, 11) entlang einer Trennebene aneinandergefügt sind.

7. Fluidisches Steuerelement nach einem der Ansprüche 5 oder 6, **dadurch gekennzeichnet, daß** der Hebel (23) mit dem Dichtrahmen (20) und dem Schwenklager (22) zwei Druckkammern zwischen dem Hebel (23) und dem oberen Gehäuseteil (11) ausbildet und zwei in diese Druckkammern mündende fluidische Rückkopplungskanäle den Hebel (23) in seinen Endstellungen druckentlasten.

8. Fluidisches Steuerelement nach einem der vorstehenden Ansprüche, **dadurch gekennzeichnet, daß** das fluidische Steuerelement in beliebiger Weise betätigbar ist.

9. Fluidisches Steuerelement nach einem der vorstehenden Ansprüche, **dadurch gekennzeichnet, daß** die Außenseite des die Strömungskanäle aufweisenden Gehäuseteils (10) eine standardisierte Schnittstelle zu weiteren Systemelementen bildet.

10. Fluidisches Steuerelement nach einem der vorstehenden Ansprüche, **dadurch gekennzeichnet, daß** ein weiterer Strömungskanal (15) als Einlaßkanal zwischen den Dichtsitzen in dem Gehäuseteil (10) angeordnet ist.

11. Fluidisches Steuerelement nach einem der Ansprüche 3 bis 10, **dadurch gekennzeichnet, daß** der Lagerarm (22) wenigstens einen aus dem Gehäuse herausragenden Betätigungsansatz (21) aufweist.

## Claims

1. A fluid control element comprising a generally flat, right parallelepipedal housing, which is composed of a pair of housing parts (10, 11), a control space (12) which is defined between the housing parts (10, 11) and into which at least first (16) and second (16') flow ducts open each of which have a first sealing seat (14) and a second sealing seat (14') associated therewith which project into the control space (12), and comprising a sealing/actuating element (13) which is located in the control space (12) and has a solid core (19) surrounded by an elastic material and which forms a two-armed lever (23) which is pivotally mounted between the housing parts (10, 11) and whose pivot bearing (22) is constituted by an envelope (18) which is made of an elastic material, tightly encloses the lever (23) and is clamped between the two flat housing parts (10, 11), the lever (23) being movable between first and second end positions, and the lever (23), in the first end position, covering the first sealing seat (14) and exposing the second sealing seat (14') and, in the second end position, opening the first sealing seat (14) and closing the second sealing seat (14'), **characterized in that** the first (14) and the second (14') sealing seats are arranged in the control space (12) in one plane at one (10) of the housing parts, that the flow ducts (16, 16') associated with the sealing seats (14, 14') lead perpendicularly through this housing part (10) and that the other housing part (11) serves as a covering of the control space (12), and that the first sealing seat (14) is closed and exposed by a seat seal (17) molded integrally with the side of the first lever arm (23a) opposite the first sealing seat (14), and that the second sealing seat (14') is closed and exposed by a seat seal (17') molded integrally with the side of the second lever arm (23b) opposite the second sealing seat (14'), the first lever arm (23a) and the second lever arm (23b) being actuating arms of the same kind.

2. The fluid control element according to claim 1, **characterized in that** the core (19) of the lever (23) consists of a rigid material.

3. The fluid control element according to either of claims 1 or 2, **characterized in that** the lever (23) has a bearing arm (22) which is arranged transversely to its longitudinal direction and whose outer ends, which are tightly enclosed by the envelope (18), are rotatably mounted by means of this envelope (18) which is clamped between the two parts of the housing (10, 11).

4. The fluid control element according to claim 3, **characterized in that** the ends of the bearing arm (22a, 22b) which laterally project from the envelope (18) are rigidly connected to the actuating arms (21).

5. The fluid control element according to any of the preceding claims, **characterized in that** the envelope (18) is constructed in one piece with a sealing frame (20) which is made of the same elastic material and encloses the control space, and the sealing frame (20) is clamped between the two parts (10, 11) of the housing.

6. The fluid control element according to any of the preceding claims, **characterized in that** the flat housing parts (10, 11) are joined to each other along a separating plane.

7. The fluid control element according to either of claims 5 or 6, **characterized in that** the lever (23), together with the sealing frame (20) and the pivot bearing (22), defines two pressure chambers between the lever (23) and the upper housing part (11), and two fluid feedback ducts which open into these pressure chambers relieve the lever (23) of pressure in its end positions.

8. The fluid control element according to any of the preceding claims, **characterized in that** the fluid control element can be actuated in any desired manner.

9. The fluid control element according to any of the preceding claims, **characterized in that** the outer side of that housing part (10) which includes the flow ducts constitutes a standardized interface to further system elements.

10. The fluid control element according to any of the preceding claims, **characterized in that** a further flow duct (15), serving as an inlet duct, is arranged between the sealing seats in the housing part (10).

11. The fluid control element according to any of claims 3 to 10, **characterized in that** the bearing arm (22) has at least one actuating extension (21) which projects from the housing.

## Revendications

1. Elément de commande fluidique comportant un boîtier parallélépipédique généralement plat, qui est constitué par deux parties de boîtier (10, 11), un espace de commande formée entre les parties de boîtier (10, 11), dans lequel débouchent au moins un premier canal d'écoulement (16) et un deuxième canal d'écoulement (16'), auxquels sont associés respectivement un premier siège d'étanchéité (14) et un deuxième siège d'étanchéité (14') faisant saillie dans l'espace de commande (12), et comportant un élément d'étanchéité/d'actionnement (13) se trouvant dans l'espace de commande, dont le noyau dur (19) est entouré par un matériau élastique et qui constitue un levier (23) à deux bras qui est monté pivotant entre les parties de boîtier (10, 11) et dont le palier pivotant (22) est formé par une enveloppe (18) en matériau élastique qui l'entoure étroitement et qui est tendue entre les deux parties de boîtier (10, 11) plates, le levier (23) pouvant être déplacé entre une première et une seconde position d'extrémité, et dans la première position d'extrémité, le levier (23) recouvrant le premier siège d'étanchéité (14) et libérant un deuxième siège d'étanchéité (14') et, dans la deuxième position d'extrémité, le levier (23) ouvrant le premier siège d'étanchéité (14) et fermant le deuxième siège d'étanchéité (14'), **caractérisé en ce que** le premier siège d'étanchéité (14) et le deuxième siège d'étanchéité (14') sont agencés dans l'espace de commande (12) dans un plan sur une (10) des parties de boîtier, **en ce que** les canaux d'écoulement (16, 16') associés aux sièges d'étanchéité (14, 14') passent à la verticale à travers cette partie de boîtier (10), et **en ce que** l'autre partie de boîtier (11) sert de couvercle de l'espace de commande (12), et **en ce que** le premier siège d'étanchéité (14) est fermé et ouvert par un joint de siège (17) conformé sur une face du premier bras de levier (23a), qui est opposée au premier siège d'étanchéité (14), et **en ce que** le deuxième siège d'étanchéité (14') est fermé et ouvert par un joint de siège (17') conformé sur une face du deuxième bras de levier (23b), qui est opposée au deuxième siège d'étanchéité (14'), le premier bras de levier (23a) et le deuxième bras de levier (23b) étant des bras d'actionnement de même type.

2. Elément de commande fluidique selon la revendication 1, **caractérisé en ce que** le noyau (19) du levier (23) est en un matériau rigide.

3. Elément de commande fluidique selon l'une des revendications 1 ou 2, **caractérisé en ce que** le levier (23) présente un bras de palier (22) agencé transversalement à sa direction longitudinale, dont les extrémités extérieures étroitement entourées par l'enveloppe (18) sont montées rotatives au moyen de cette enveloppe (18) tendue entre les deux parties de boîtier (10, 11).

4. Elément de commande fluidique selon la revendication 3, **caractérisé en ce que** les extrémités du bras de palier (22a, 22b) faisant latéralement saillie hors de l'enveloppe (18) sont reliées de manière rigide aux bras d'actionnement (21).

5. Elément de commande fluidique selon l'une des revendications précédentes, **caractérisé en ce que** l'enveloppe (18) est réalisée dans le même matériau élastique en une seule pièce avec un cadre d'étanchéité (20) qui entoure l'espace de commande et **en ce que** le cadre d'étanchéité (20) est tendu entre les deux parties du boîtier (10, 11).

6. Elément de commande fluidique selon l'une des revendications précédentes, **caractérisé en ce que** les parties de boîtier (10, 11) plates sont assemblées l'une à l'autre le long d'un plan de séparation.

7. Elément de commande fluidique selon l'une des revendications 5 ou 6, **caractérisé en ce que** le levier (23) forme avec le cadre d'étanchéité (20) et le palier pivotant (22) deux chambres de pression entre le levier (23) et la partie de boîtier (11) supérieure, et **en ce que** deux canaux de réaction fluidique débouchant dans ces chambres de pression libèrent le levier (23) de la pression dans ses positions d'extrémité.

8. Elément de commande fluidique selon l'une des revendications précédentes, **caractérisé en ce que** l'élément de commande fluidique peut être actionné d'une manière quelconque.

9. Elément de commande fluidique selon l'une des revendications précédentes, **caractérisé en ce que** la face extérieure de la partie de boîtier (10) présentant les canaux d'écoulement forme une interface standard vers d'autres éléments du système.

10. Elément de commande fluidique selon l'une des revendications précédentes, **caractérisé en ce qu'**un autre canal d'écoulement (15) servant de canal d'admission est agencé dans la partie de boîtier (10) entre les sièges d'étanchéité.

11. Elément de commande fluidique selon l'une des revendications précédentes, **caractérisé en ce que** le bras de palier (22) présente au moins une pièce d'actionnement (21) faisant saillie hors du boîtier.
